# EUROPÄISCHE PATENTSCHRIFT

(11) **EP 3 219 519 B1**
(45) Veröffentlichungstag und Bekanntmachung des Hinweises auf die Patenterteilung: **20.06.2018**
(21) Anmeldenummer: 17155789.5
(22) Anmeldetag: 13.02.2017
(51) Int. Cl.: B60C 27/12

(54) **SPANNVORRICHTUNG FÜR EINE GLEITSCHUTZKETTE**
TENSIONING DEVICE FOR AN ANTI-SKID CHAIN
DISPOSITIF DE SERRAGE POUR UNE CHAÎNE ANTIDÉRAPANTE

(30) Priorität: 15.03.2016 DE 102016104744
(43) Veröffentlichungstag der Anmeldung: 20.09.2017
(73) Patentinhaber: Pewag Schneeketten GmbH, 8041 Graz (AT)
(72) Erfinder: SCHADER, Gerald, 9065 Klagenfurt/Ebenthal (AT); NIESS, Bernhard, 8311 Markt Hartmannsdorf (AT); BERGHOLD, Johann, 8063 Eggersdorf bei Graz (AT)
(74) Vertreter: Patentanwälte Geyer, Fehners & Partner mbB

(56) Entgegenhaltungen:
- WO-A2-2007/092786
- DE-A1-102010 018 251
- US-B1- 6 915 825

## Beschreibung

Die Erfindung bezieht sich auf eine Spannvorrichtung für eine Gleitschutzkette, mit einem Gehäuse mit einem Deckel und mit einer Einrichtung zum Spannen eines Spannseiles der Gleitschutzkette.

Bei modernen Gleitschutzketten sind solche Spannvorrichtungen, mit denen das Spannseil der betreffenden Gleitschutzkette im montierten Zustand gespannt werden kann und danach einen Rücklauf entgegen der Spannrichtung vermeidet, in großer Anzahl bekannt.

Die DE 297 03 911 U1 beschreibt eine Spannvorrichtung für Gleitschutzketten mit einem Gehäuse, in dem auf einer Wickeltrommel der Spannstrang der Gleitschutzkette aufwickelbar ist, wobei die Wickeltrommel drehfest mit einem Klinkenrad verbunden ist, dem seinerseits eine federbelastete, über eine Betätigungseinrichtung bedienbare Sperrklinke zugeordnet ist. Dabei ist die Wickeltrommel zum Aufwickeln des Spannstrangs in Aufwickelrichtung durch eine Feder vorgespannt. Das Aufwickeln des Spannstrangs kann über die außen am Gehäuse zugängliche Betätigungseinrichtung ausgelöst werden, die ein Betätigungsglied aufweist, das um eine zur Achse der Wickelrolle parallele Achse drehbar gelagert ist. Diese bekannte Spannvorrichtung ist jedoch unpraktisch in der Handhabung des Betätigungsgliedes, das im Falle einer Verschmutzung oder Vereisung auch leicht verklemmen kann.

Die EP 1 935 674 A1 beschreibt eine Spannvorrichtung für eine Gleitschutzkette mit einem Gehäuse, wobei ein in das Gehäuse einziehbarer Spannstrang der Gleitschutzkette im Gehäuse an eine um ihre Achse drehbar gelagerte, in Aufwickelrichtung vorgespannte Wickelrolle angeschlossen ist. Diese ist drehfest mit einem Zahnkranz verbunden, in den eine Sperrklinke eingreift, wobei seine Bewegung je nach Stellung der Sperrklinke entweder in Aufwickelrichtung oder in Gegenrichtung dazu blockierbar ist. Dabei hat sich aber gezeigt, daß eine Gleitschutzkette mit einer solchen Spanneinrichtung auf einem Fahrzeugrad zu Beschädigungen führen kann, falls sie stramm auf dem Rad montiert ist, wenn z. B. die Gleitschutzkette um das Rad wandert, was insbesondere bei höheren Geschwindigkeiten vorkommen kann. Eine solche Bewegung einer fest anliegenden Kette kann zu Scheuern und Beschädigung eines Reifens führen, was insbesondere für Reifen von Lastkraftwagen wegen deren größerer Dimension und deren größerem Gewicht sowie der stärkeren Belastung gilt.

Eine Spannvorrichtung für eine Schneekette wird auch in der EP 1 174 292 A2 beschrieben, die ein Gehäuse und ein elastisches Rückholelement umfaßt, wobei dieses in einem im Gehäuse ausgebildeten Kanal aufgenommen ist. An dem elastischen Element ist ein Kuppelkörper vorgesehen, der in Eingriff mit einem durchlaufenden Abschnitt der Schneekette gebracht werden kann. Diese bekannte Sperrvorrichtung benötigt jedoch einen relativ großen Platzbedarf, und auch die Kraftverhältnisse beim Vorspannen wie auch die Spannung während des Einsatzes der Schneekette sind nicht immer zufriedenstellend.
Die Spannvorrichtung aus der DE 10 2004 037 332 B3 arbeitet mit zwei Spannsträngen: Dabei wirken auf die Außenfläche eines Rades sowohl ein Blockierorgan, wie ein dazu symmetrisches Bremsorgan, was die Drehung des Rades in die eine oder in die andere Richtung hemmt, ohne daß sich jedoch eine effektive Verringerung einer Einzugsgeschwindigkeit einstellt.

In der EP 1 301 361 B1 wird eine Spannvorrichtung für eine Schneekette beschrieben, bei der im Gehäuse ein Spannstrang der Gleitschutzkette auf eine Wickelrolle aufwickelbar ist. Durch eine Betätigungseinrichtung ist der Spannstrang entgegen der Spannrichtung blockierbar, wobei die Wickelrolle ihrerseits in Aufwickelrichtung vorgespannt ist. Ferner sind zwei Klinkenräder vorgesehen, die miteinander drehfest verbunden sind, der Sperrrichtungen gegenläufig sind und deren jedem eine federbelastete Sperrklinke zugeordnet ist, wobei die Sperrklinken mittels des Betätigungsgliedes wechselseitig in Eingriff mit den zugehörigen Klinkenrädern bringbar sind. Der Zusammenbau dieser bekannten Spannvorrichtung ist wegen der Kompliziertheit deren Gesamtanordnung etwas aufwendig, wodurch die Herstellung auch verteuert wird.
Dabei besteht auch die Gefahr, wie sie bei allen bekannten Spanneinrichtungen mit einer in Aufwickelrichtung vorgespannten Wickelrolle gegeben ist, daß insbesondere beim Einziehen einer größeren Stranglänge am Ende des Einzugsweges eine recht große Einzugsgeschwindigkeit des Spannstranges in das Gehäuse der Spannvorrichtung hinein auftritt, was durchaus zu einer Verletzungsgefahr für den Benutzer durch das Strangende führen kann. Weitere Spannvorrichtungen mit einem manuell zu betätigendem Drehrad sind aus den Dokumenten DE 10 2010 018 251 A1 und US 6915825 B1 bekannt. Hiervon ausgehend liegt der Erfindung die Aufgabe zugrunde, eine Spannvorrichtung für Gleitschutzketten vorzuschlagen, die einen einfachen Aufbau aufweist, kostengünstig herstellbar ist und bei der Herstellung sehr schnell montiert sowie bei der praktischen Benutzung ein besonderes rasches Spannen erlaubt.

Erfindungsgemäß wird dies erreicht durch eine Spannvorrichtung für eine Gleitschutzkette, mit einem Gehäuse mit einem Deckel und mit einer Einrichtung zum Spannen eines Spannseiles der Gleitschutzkette, wobei diese Einrichtung als manuell betätigbares Drehrad ausgebildet ist, das durch eine zentrale Öffnung im Deckel durch diesen hindurch ragt, ferner mit einem ersten Klinkenrad, das einen axialen Mittelvorsprung aufweist, mit einem axial neben dem ersten Klinkenrad angeordneten zweiten Klinkenrad mit einer zentralen Öffnung, durch die der axiale Mittelvorsprung des ersten Klinkenrades hindurch gesteckt ist, wobei das zweite Klinkenrad einen seinem umlaufenden Zahnkranz axial nachgeschalteten Ringbereich mit einer Umlaufnut zum Aufwickeln des Spannseiles umfaßt, der eine radial innere Ausnehmung aufweist, in die der Mittelvorsprung des ersten Klinkenrades hineinragt und in der im radialen Bereich zwischen dem Mittelvorsprung und der inneren Umlauffläche der Ausnehmung eine Spiralfeder sitzt, deren radial inneres Ende an den Mittelvorsprung des ersten Klinkenrades und deren radial äußeres Ende an die innere Umfangsfläche der inneren Ausnehmung des zweiten Klinkenrades angeschlossen ist, wobei das Drehrad über eine Druckfeder axial in Richtung zum Gehäusedeckel hin vorgespannt und entgegen der Vorspannung axial um eine vorgegebene Strecke in das Gehäuse eindrückbar ist, und wobei ferner eine kreisförmige Zwischenplatte zwischen Deckel und zweitem Klinkenrad zwischengeschaltet ist, auf der sich die Druckfeder abstützt und die an ihrer Unterseite einen zentral von ihr axial vorspringenden Formabsatz aufweist, der drehschlüssig mit dem axialen Mittelvorsprung des ersten Klinkenrades in Eingriff steht, ferner mit zwei verschwenkbaren Sperrklinken, deren jede dem Zahnkranz eines Klinkenrades zugeordnet sowie in Richtung auf einen Eingriff mit diesem hin federvorgespannt ist, wobei im Eingriffszustand das jeweilige Klinkenrad entgegen der Spannrichtung der Spiralfeder blockiert, in Gegenrichtung hierzu jedoch freigegeben ist, und mit einer Betätigungseinrichtung, mit der beide Sperrklinken in eine erste Stellung in Eingriff mit beiden Klinkenrädern und in eine zweite Stellung außer Eingriff mit beiden Klinkenrädern bringbar sind.

Die erfindungsgemäße Spannvorrichtung arbeitet, im Gegensatz zu allen bekannten Spannvorrichtungen, bei denen in einem Gehäuse eine in Aufwickelrichtung vorgespannte Wickelrolle für das Spannseil vorgesehen ist, die bei eingezogenem Spannseil ihre maximale Spannkraft ausübt, stattdessen mit einer Anordnung, bei der das Aufwickelelement für das Spannseil im freigegebenen Zustand des Spannseiles überhaupt keiner Vorspannung unterliegt. Die beiden Klinkenräder, die bei der erfindungsgemäßen Spannanordnung im Gehäuse vorgesehen sind, liegen zwar axial nebeneinander, sind jedoch nicht aneinander befestigt. Die Spannkraft wird erst bei der Montage, nach dem Überstülpen der Gleitschutzkette über die Lauffläche des Reifens, anschließend vom Benutzer manuell durch ein entsprechendes Verdrehen des aus dem Deckel des Gehäuses der Spannvorrichtung herausragenden Drehrades aufgebracht. Dabei muß das Drehrad um einen kleinen Abstand in das Gehäuse hineingedrückt werden, um eine bei seinem Anliegen gegen den Deckel bewirkte Drehblockierung gegenüber diesem aufzuheben und mit einer zwischen ihm und dem nachgeschalteten zweiten Klinkenrad angebrachten Zwischenplatte in eine formschlüssige Drehverbindung zu gelangen, durch die bei Verdrehen des Drehrades die Zwischenplatte ebenfalls verdreht wird, die ihrerseits mit einem an ihrer Unterseite zentral angebrachten, axial vorspringenden Formabsatz form- und drehschlüssig mit dem axialen Mittelvorsprung des ersten Klinkenrades in Eingriff steht. Wird also das Drehrad eingedrückt und dann mit ihm die Zwischenplatte und über diese der axiale Mittelvorsprung des ersten Klinkenrades, mit diesem zusammen, verdreht, dann wird dabei über das Drehen des axialen Mittelvorsprungs die Spiralfeder gleichermaßen gespannt. Dabei verbleibt das zweite Klinkenrad, das an das radial äußere Ende der Spiralfeder angeschlossen ist, zunächst noch in Ruhe, bis durch die Spiralfeder beim Verdrehen des Drehrades durch den Benutzer eine solche Vorspannung zwischen dem axialen Mittelvorsprung des ersten Klinkenrades und der inneren Umfangsfläche der inneren Ausnehmung des zweiten Klinkenrades aufgebaut ist, das diese dann auch zu einer Bewegung des zweiten Klinkenrades in Aufspannrichtung führt. Da dieses mit einem seinem Zahnkranz axial nachgeschalteten Ringbereich mit einer Aufnahmenut zum Aufwickeln des Spannseiles versehen ist, findet bei einer Verdrehung des zweiten Klinkenrades in Spannrichtung der Aufbau einer wachsenden Vorspannkraft auf das Spannseil statt, die dann zu einem Anspannen des Spannseiles und zum Auftreten der bei der Montage der Kette infolge der Spannkraft möglichen Spannbewegungen am (ruhenden) Reifen führt. Ein weiteres Verdrehen des Drehrades (etwa bis hin zum Erreichen einer Maximalspannung) wird dann noch als überschüssige Spannkraft in der Spiralfeder gespeichert, was bei einer Bewegung des Reifens noch zu einer weiteren Spannung des Spannseiles führt, durch die die Kette ausreichend fest am Reifen montiert ist.

Bei alledem befindet sich die Betätigungseinrichtung in ihrer ersten Stellung, in der sie beide Sperrklinken in Eingriff mit den beiden Klinkenrädern hält, wodurch diese entgegen der Spannrichtung der Spiralfeder blockiert, in Gegenrichtung jedoch freigegeben sind. Dadurch ist sichergestellt, daß sowohl das durch das Drehrad manuell angetriebene erste Klinkenrad, wie auch das ihm nachgeschaltete zweite Klinkenrad entgegen der Spannrichtung der Spiralfeder blockiert sind, so daß beim Aufbau der Spannung der Spiralfeder beide Klinkenräder gegen einen unerwünschten Rücklauf arretiert sind.

Soll dann nach erfolgter Benutzung die auf dem Reifen sitzende Gleitschutzkette wieder demontiert werden, ist es nur erforderlich, die Betätigungseinrichtung in ihre zweite Schaltstellung zu bewegen, in welcher die Sperrklinken beider Klinkenräder aus ihrem Eingriff mit diesen entfernt sind und damit die Klinkenräder in beide Drehrichtungen freigegeben werden. Diese Freigabe bewirkt, daß sich anschließend die Spiralfeder entspannen kann, wobei gleichzeitig das Spannseil entspannt wird und dabei um den vorher bewegten Spannweg wieder aus dem Gehäuse herauslaufen kann.

Da in diesem Ruhezustand auch keine Vorspannkraft mehr auf das Spannseil wirkt, weil die Spiralfeder ihrerseits entspannt ist, kann es auch nicht zu dem bei in Spannrichtung vorgespannten Wickelrollen bekannten Vorgang eines Zurückspringens des Spannseiles mit hoher Geschwindigkeit in das Gehäuse kommen.

Die erfindungsgemäße Spannvorrichtung weist zunächst einen sehr einfachen und montagegünstigen Aufbau auf, in dem mit Ausnahme der Schiebesteuerung für die Betätigungseinrichtung und der beiden Sperrklinken alle anderen Elemente konzentrisch übereinander angeordnet und in einer Richtung, nämlich von oben her, in einem Aufbau und ohne Wenden der Anordnung zusammenbaubar sind. Außerdem umfaßt der Aufbau nur relativ wenige Teile, die fast alle als Spritzgußteile ausführbar und daher sehr günstig in der Herstellung sind, wobei sich gezeigt hat, daß eine Montagezeit von nur zwei bis drei Minuten für den Zusammenbau der erfindungsgemäßen Spannvorrichtung erreicht werden kann.

Die erfindungsgemäße Spannvorrichtung gestattet auch im praktischen Einsatz ein sehr schnelles Spannen, insbesondere wenn sie so an der Gleitschutzkette befestigt ist, daß sie, von der Außenseite des Reifens gesehen, zentral mittig am Reifen angeordnet und über nur z. B. drei Paar Steghalterungen an der äußeren Seitenhalterung der Kette befestigt ist.

Das Spannen der Reifenschutzkette durch den Benutzer kann ebenfalls sehr rasch erfolgen, wobei Versuche zeigten, daß hier ein Spannen in etwa 15 Sekunden durch den Benutzer möglich ist.

Die Drehrichtung des Drehrades, in welcher wirksam die Spiralfeder gespannt werden kann, kann konstruktiv vorgegeben werden. Es ist jedoch besonders empfehlenswert, die Anordnung so auszubilden, daß bei Drehrichtung des Drehrades im Uhrzeigersinn die Spannung der Spiralfeder erfolgt.

In einer bevorzugten Ausgestaltung der Erfindung wird das Drehrad auf seiner Oberseite in seinem umlaufenden Randbereich, der von unten gegen einen entsprechenden Randbereich der zentralen Öffnung des Deckels anliegt, mit nach oben gerichteten Klinken versehen, die im nicht-eingedrückten Zustand des Drehrades mit an der Unterseite des Gehäusedeckels im Randbereich um dessen mittlere Öffnung herum angebrachten Klinkenzähnen unter Vorspannung der Druckfeder in Eingriff stehen und das Drehrad in beide Drehrichtungen blockieren. Hierbei handelt es sich um eine einfach herstellbare Ausgestaltung, die auch bei der Montage das Montieren der Einzelteile durch Aufeinandersetzen der einzelnen konstruktiven Elemente gut ermöglicht.

Eine andere vorzugsweise Ausgestaltung der Erfindung besteht auch darin, daß die Zwischenplatte an ihrer Oberseite mit einem zentralen Ringabsatz versehen ist, in dem ein axialer Endabschnitt der Druckfeder, welche das Drehrad gegen den Deckel drückt, aufnimmt.

In einer weiteren vorzugsweisen Ausgestaltung der Erfindung ist die Zwischenplatte an ihrer Oberseite mit ringförmig umlaufend angeordneten, axial hoch ragenden Formvorsprüngen versehen, die beim Eindrücken des Deckels mit an dessen Unterseite angebrachten axialen Formvorsprüngen in einen drehschlüssig wirksamen Formeingriff bringbar sind und dadurch eine erforderliche drehschlüssige Verbindung zwischen dem Drehrad und der Zwischenplatte schaffen.

Die bei der Erfindung einsetzbare Betätigungseinrichtung kann in unterschiedlicher Weise gestaltet werden. Ganz besonders bevorzugt wird sie jedoch in Form eines am Gehäuse gelagerten Betätigungsgliedes ausgebildet, das längs einer kreisabschnittförmig verlaufenden Bewegungsbahn um die Mittelachse der Klinkenräder herum beweglich am Gehäuse geführt ist und einen aus dem Gehäuse herausragenden Fortsatz aufweist, mittels dessen es zwischen zwei Einstellpositionen verschiebbar ist. Diese Ausgestaltung hat einen außerordentlich geringen Platzbedarf und gestattet ein gut wirksames Verstellen der Betätigungseinrichtung.

Dabei wird das Betätigungsglied als Schiebeelement mit zwei streifenförmigen Bügeln ausgestattet, die sich von dem nach außen ragenden Fortsatz beidseits desselben in Richtung der kreisförmigen Bewegungsbahn des Betätigungsgliedes erstrecken, wobei auf dessen dem Fortsatz gegenüberliegenden Seite ein dort vorspringender Steuerkörper vorgesehen ist, mittels dessen die zwei Sperrhebel in einer Schaltstellung der Betätigungseinrichtung in Eingriff mit den Zahnkränzen beider Klinkenräder stehen, während in der anderen Schaltstellung der Betätigungseinrichtung beide Klinkenhebel außer Eingriff mit den Klinkenrädern gehalten sind. Hierdurch ist eine für den Benutzer einfach betätigbare und rasch zwischen beiden Schaltstellungen umschaltbare Ausbildung gegeben.

Eine weitere vorteilhafte Ausgestaltung der erfindungsgemäßen Spannvorrichtung wird auch dadurch erreicht, daß die Betätigungseinrichtung so ausgebildet ist, daß sie zwischen ihren beiden Schaltstellungen noch eine Schaltzwischenstellung umfaßt, in der nur der Sperrhebel des ersten Klinkenrades außer Eingriff mit diesem gebracht ist, während der andere Sperrhebel sich gleichzeitig noch in Eingriff mit dem zweiten Klinkenrad befindet. Bei dieser Ausgestaltung wird erreicht, daß vor dem Demontieren der Kette anstelle einer gleichzeitigen Freigabe beider Klinkenräder zunächst nur das erste Klinkenrad freigegeben wird, das dem Anteil der Gesamtspannung der Spiralfeder, der noch von dem ersten Klinkenrad abgestützt wird, freigegeben wird, und erst dann beim Weiterschalten in die zweite Endstellung der Betätigungseinrichtung die restliche Spannung, die auf das zweite Klinkenrad noch einwirkt, freigegeben ist. Damit kann eine stufenweise, etwas günstigere Freigabe der gesamten Spannung im Spannseil vorgenommen werden.

Infolge der konzentrischen Anordnung nahezu aller konstruktiver Einzelelemente der erfindungsgemäßen Spannvorrichtung hat diese auch nur einen sehr geringen Platzbedarf, wobei sich wegen der Möglichkeit einer Ausbildung ebenfalls fast aller konstruktiven Einzelelemente als Spritzgußteile auch ein sehr geringes Gesamtgewicht ergibt. Gleichzeitig ist die Bedienung durch den Benutzer sehr einfach und das Montieren bzw. Demontieren der entsprechenden Gleitschutzkette ist einschließlich des erforderlichen Spannens bzw. Entspannens besonderes rasch möglich.

Die Erfindung wird nachfolgend anhand der Zeichnungen im Prinzip beispielshalber noch näher erläutert. Es zeigen:
- Fig. 1: eine perspektivische Explosionsdarstellung einer erfindungsgemäßen Spanneinrichtung;
- Fig. 2: eine Schrägansicht einer erfindungsgemäßen Spanneinrichtung, aber mit abgenommenem Deckel und in teilweise geschnittenem Zustand, gezeigt in der ersten Schaltstellung der Betätigungseinrichtung;
- Fig. 3: die Darstellung aus Fig. 2, jedoch in der zweiten Stellung der Betätigungseinrichtung;
- Fig. 4: eine perspektivische Ansicht auf einen Reifen, an dem eine Gleitschutzkette montiert ist, die mit einer erfindungsgemäßen Spannvorrichtung versehen ist;
- Fig. 5, 6 und 7: Draufsichten auf eine zweite Ausführungsform einer erfindungsgemäßen Spanneinrichtung, ohne Deckel, Drehrad und Zwischenplatte, wobei sich die Betätigungseinrichtung in Fig. 5 in ihrer ersten Schaltstellung, in Fig. 7 in ihrer zweiten Schaltstellung und in Fig. 6 in einer Schalt-Zwischenstellung befindet, und
- Fig. 8: eine vergrößerte, perspektivische Detaildarstellung eines Ausschnitts aus der Unterseite des Deckels und der zu ihm ausgerichteten Zwischenplatte.

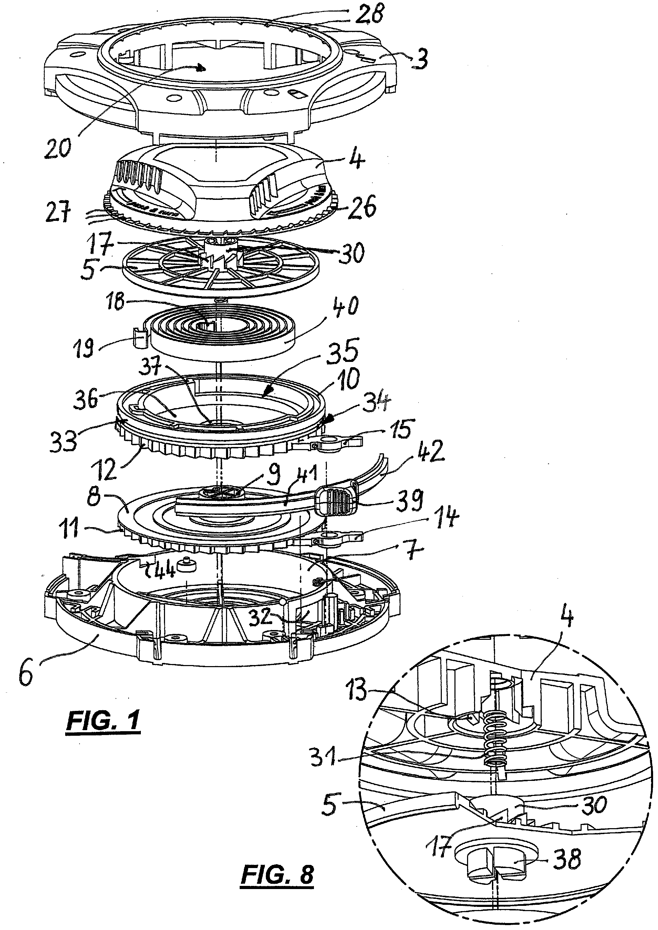

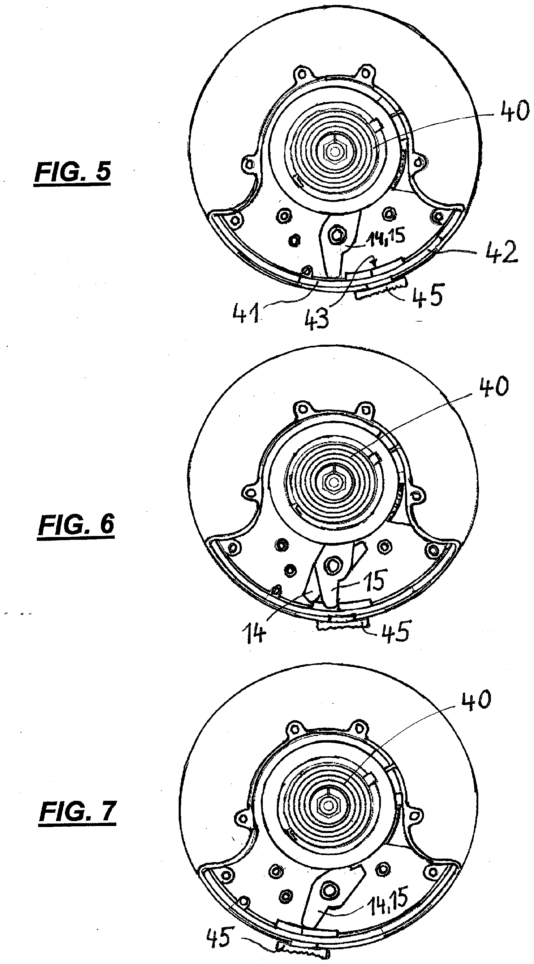

Die nachfolgenden Figuren stellen zwei Ausführungsformen einer erfindungsgemäßen Spannvorrichtung dar, wobei die Figuren 1 bis 3 eine erste Ausführungsform und die Figuren 5 bis 7 eine demgegenüber etwas geänderte zweite Ausführungsform wiedergeben. Dabei sind in allen Figuren gleiche Teile mit gleichen Bezugszeichen versehen.

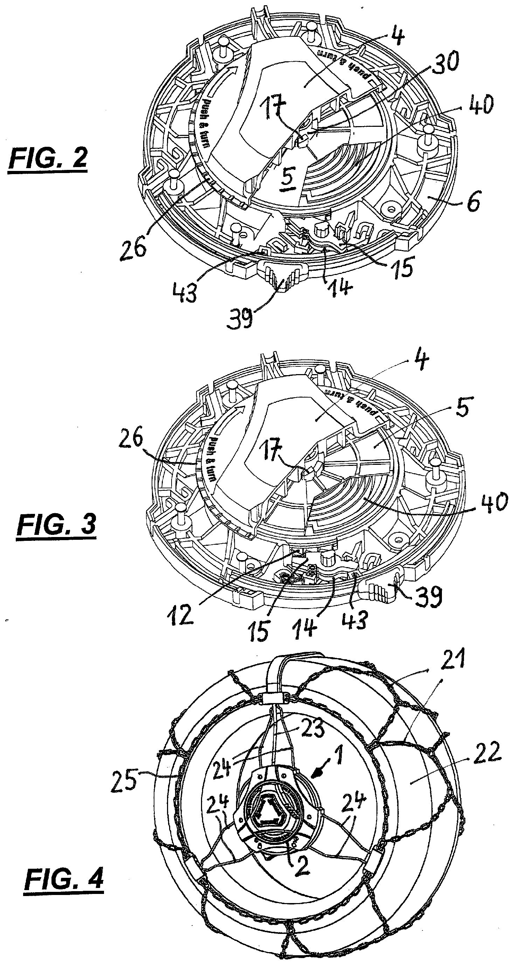

Zunächst sei Bezug genommen auf die Darstellung der Fig. 4, welche in einer perspektivischen Darstellung eine Gleitschutzkette 21, die auf einem Reifen 22 montiert ist, zeigt.

Auf der Vorderseite des Reifens 22 ist, mittig zu diesem, eine Spannvorrichtung 1 zum Spannen eines Spannstranges 23 angebracht. Die Spannvorrichtung 1 ist dabei über drei Paare Halteelemente 24, die gleichmäßig um den Umfang der Spannvorrichtung 1 herum angebracht sind und sich im Wesentlichen radial von dieser aus strecken, an einer äußeren umlaufenden Seitenhalterung 25 der Gleitschutzkette 21 befestigt, so daß die Spannvorrichtung 1 stets mittig an der montierten Gleitschutzkette 21 gehaltert wird.

Die Spannvorrichtung 1 ist nun in Fig. 1 in einer perspektivischen Explosionsdarstellung wiedergegeben.

Aus ihr ist ersichtlich, daß die Spannvorrichtung 1 ein aus einem Deckel 3 und einem Bodenteil 6 bestehendes Gehäuse 2 aufweist, wobei im Deckel 3 eine zentrale Kreisöffnung 20 ausgebildet ist.

Weiterhin ist ein manuell bedienbares Drehrad 4 vorgesehen, das im fertigmontierten Zustand von unten her durch die Öffnung 20 nach oben hindurchragt.

An seiner unteren Basis ist das Drehrad 4 mit einem schmalen, radial nach außen vorstehenden, umlaufenden Klinkenkranz 26 versehen, dessen Klinken 27 nach oben hin vorspringen.

Dieser umlaufende Klinkenkranz 26 hat einen etwas größeren Durchmesser als die obere Öffnung 20 im Deckel 3, so daß im zusammengebauten Zustand die Klinken 27 des Klinkenkranzes 26 gegen um den umlaufenden Randbereich der oberen Öffnung 20 im Deckel 3 herum entsprechend angeordnete, nach unten gerichtete Klinken 28 in einen drehschlüssig wirksamen Formschluß gelangen, der verhindert, daß das Drehrad 4 in seinen beiden Drehrichtungen relativ gegenüber dem Deckel 3 verdreht werden kann.

Unterhalb des Drehrades 4 ist eine kreisförmige Zwischenplatte 5 vorgesehen, die an ihrer Oberseite einen zentralen, zylindrisch nach oben ragenden Ringabsatz 30 trägt und im zusammengebauten Zustand einen axialen Endabschnitt der Druckfeder 31 aufnimmt. Auf diese Weise kann sich die Druckfeder 31 an der Zwischenplatte 5 axial abstützen, während sie an ihrem axial gegenüberliegenden Ende an der Unterseite des Deckels 3 anliegt. Diese gegenseitigen Zuordnungen sind besonders gut aus der Detaildarstellung der Fig. 8 entnehmbar, welche die relativen Anordnungen der Druckfeder 31 einerseits und der Unterseiten des Drehrades 4 sowie der Zwischenplatte 5 andererseits in vergrößertem Maßstab zeigt.

Am Bodenteil 6 des Gehäuses 2 ist, einstückig mit diesem als Spritzgußteil ausgebildet, eine kreisförmig umlaufende, axial nach oben gerichtete Umlaufwand 7 ausgebildet, die radial einen Aufnahmeraum umschließt, in den ein erstes Klinkenrad 8 einsetzbar ist, das umlaufend an seiner Unterseite mit einem Zahnkranz 11 versehen ist. Dem Zahnkranz 11 ist eine verschwenkbare Sperrklinke 14 zugeordnet, die in einen drehblockierenden Formeingriff mit den Zähnen des Zahnkranzes 11 verschwenkt werden kann, wie diese Position in der Explosionsdarstellung der Fig. 1 gezeigt ist.

Das erste Klinkenrad 8 ist seinerseits mit einem mittigen, axial nach oben vorstehenden Mittelvorsprung 9 mit einer zylindrisch umlaufenden Mantelfläche versehen.

Axial unmittelbar nachgeschaltet ist dem ersten Klinkenrad 8 ein zweites Klinkenrad 10, das ebenfalls an seiner Unterseite radial umlaufend mit einem Zahnkranz 12 versehen ist, dem wiederum eine verschwenkbare Sperrklinke 15 zugeordnet und in eine Eingriffstellung mit den Zähnen des Zahnkranzes 12 verschwenkbar ist, wie sie in der Explosionsdarstellung der Fig. 1 gezeigt ist, und in der das zweite Klinkenrad 10 in einer Drehrichtung entgegen dem Uhrzeigersinn blockiert ist, in der Gegenrichtung aber frei umlaufen kann.

Die Sperrklinken 14 und 15 sind im eingebauten Zustand in geeigneter Weise in Richtung auf ihre Eingriffstellung mit den Zahnkränzen 11 und 12 hin federvorgespannt. Im Eingriffszustand beider Sperrklinken 14, 15 ist das jeweilige Klinkenrad 8 bzw. 10 entgegen dem Uhrzeigersinn blockiert, im Uhrzeigersinn aber frei verdrehbar.

In der ringförmigen Umlaufwand 7 am Bodenteil 6 ist an einer geeigneten Stelle eine Ausnehmung 32 angebracht, durch die im montierten Zustand die beiden Sperrklinken 14 und 15 radial von außen her in Eingriff mit den Zahnkränzen 11 und 12 der beiden Klinkenräder 8 und 10 eingeschwenkt werden können. Dieser Zustand ist in Fig. 2 dargestellt, wobei in dieser Zeichnung, zur besseren Darstellung, das Drehrad 4 etwa hälftig geschnitten und auch die unter diesem liegende Zwischenplatte 5 teilweise geschnitten dargestellt ist. Auch ist bei den Darstellungen der Fig. 2 und 3 der jeweilige Deckel 3 weggelassen.

Das zweite Klinkenrad 10 ist axial oberhalb des unten umlaufenden Zahnkranzes 12 mit einem Ringbereich 33 versehen, der an seiner radialen Außenseite mit einer Umlaufnut 34 ausgebildet ist, die zum Aufwickeln eines Spannseiles (in Fig. 1 nicht dargestellt) dient. Ferner weist der Ringbereich 33 eine innere Ausnehmung 35 sowie, am unteren axialen Ende des zweiten Zahnkranzes 12 eine radial abschließende Bodenplatte 36 auf, die zentral mit einer Durchgangsöffnung 37 versehen ist.

Im zusammengebauten Zustand, wenn das erste Klinkenrad 8 innerhalb der von der ringförmigen Umlaufwand 7 umschlossenen Aufnahme der Bodenplatte 36 sitzt und das zweite Klinkenrad 10 axial über ihm angeordnet ist, ragt der axiale Mittelvorsprung 9 des ersten Klinkenrades 8 durch die Öffnung 37 in der Bodenplatte 36 axial nach oben hin durch, wobei die Dimensionierung der Teile so ausgeführt wird, daß bei aufeinanderliegenden Klinkenrädern 8 und 10 in der radial inneren Ausnehmung 35 des Ringbereiches 33 des zweiten Klinkenrades 10 der axiale Mittelvorsprung 9 des ersten Klinkenrades 8 soweit axial vorsteht, daß sein oberes Ende bis an oder nahezu bis an das obere axiale Ende des zweiten Klinkenrades 10 reicht.

Die Spannvorrichtung 1 umfaßt außerdem eine Spannfeder 40 in Form einer Spiralfeder, die ein radial innenliegendes Ende 18 und ein radial außenliegendes Ende 19 aufweist.

Im eingebauten Zustand ist die Spannfeder 40 innerhalb der radialen Ausnehmung 35 des zweiten Klinkenrades 10 angeordnet und liegt auf dessen Bodenplatte 36 auf. Dabei ist ihr äußeres radiales Ende 19 in geeigneter Weise mit dem Innenumfang der Ausnehmung 35 verbunden und ihr inneres radiales Ende 18 ist an der äußeren Umfangsfläche des axialen Mittelvorsprungs 9 am ersten Klinkenrad 8 befestigt.

Im zusammengebauten Zustand sitzt auf der Anordnung der Klinkenräder 8 und 10 und der im letzteren angeordneten Spannfeder 40 die kreisförmige Zwischenplatte 5, die an ihrer Unterseite mittig einen zentral nach unten vorspringenden Formabsatz 38 aufweist.

Dieser Formabsatz 38 greift mittig von der Oberseite des axialen Mittelvorsprungs 9 des ersten Klinkenrades 8 her in dessen Innenraum, wodurch eine drehschlüssige Verbindung zwischen der Zwischenplatte 5 und dem ersten Klinkenrad 8 geschaffen ist. Die Anordnung des zentralen Formabsatzes 38 an der Unterseite der Zwischenplatte 5 ist aus der Detaildarstellung der Fig. 8 gut entnehmbar.

Die Zwischenplatte 5 ist weiterhin an ihrer Oberseite neben dem dort vorliegenden zentralen Ringabsatz 30 auch noch mit diesen umlaufend angeordneten, axial nach oben vorragenden Formvorsprüngen 17 versehen, die, wenn das Drehrad 4 axial etwas in den Deckel 3 eingedrückt wird, in formschlüssigen Wirkeingriff mit an der Unterseite des Drehrades 4 entsprechend angebrachten axialen Formvorsprüngen 13 formschlüssig in Eingriff treten. In diesem Zustand, bei dem das Drehrad 4 allerdings stets vom Benutzer etwas eingedrückt gehalten werden muß, bewirkt eine Drehung des Drehrades 4 eine entsprechende Verdrehung der Zwischenplatte 5 und damit des ersten Klinkenrades 8. Dabei ist es besonders empfehlenswert, die Gesamtausbildung so vorzunehmen, daß die Spannfeder 40 bei einer Drehung des Drehrades 4, die gleichzeitig eine Drehung des axialen Mittelvorsprungs 9 des ersten Klinkenrades 8 und damit über das an diesem befestigte radial innere Ende 18 der Spannfeder 40 bewirkt, eine Spannung der letzteren aufbaut. Dabei sind die Klinkenräder 8 und 10 mit ihren Zahnkränzen 11 und 12 und die entsprechenden Sperrklinken 14 und 15 so eingerichtet, daß eine Spannung der Spannfeder 40 bei einer Verdrehung des Drehrades im Uhrzeigersinn stattfindet, wobei ein unerwünschter Rücklauf beider Klinkenräder 8 und 10 über den in diese Richtung blockierenden Zahneingriff der Sperrklinken 14 und 15 mit den Zahnkränzen 11 und 12 verhindert ist.

Sobald der Benutzer das Drehrad 4 losläßt, wird dieses durch die Druckfeder 31 wieder nach oben gegen den Deckel 3 gedrückt, wodurch die Klinken 26 des Drehrades 4 mit den Klinken 28 um die Öffnung 20 des Deckels 3 wieder in drehverriegelnden Eingriff gelangen.

Schließlich umfaßt die Spannvorrichtung 1 aber auch noch eine bewegliche Betätigungseinrichtung, mit der die beiden Sperrklinken 14, 15 in einer ersten Stellung der Betätigungseinrichtung in Eingriff mit ihren Klinkenrädern 8 und 10 gebracht und gehalten werden können (wie dies in Fig. 2 dargestellt ist), während sie in einer zweiten Stellung der Betätigungseinrichtung außer Eingriff mit beiden Klinkenrädern gebracht und so gehalten werden können (vgl. Fig. 3).

Die Betätigungseinrichtung umfaßt dabei einen aus dem Bodenteil 6 bzw. dem Gehäuse 2 nach außen vorspringenden Fortsatz 39, der zwei kreisabschnittförmig gebogene seitliche Flügel 41 und 42 (nach jeder seiner beiden Seiten) aufweist und mit diesen in geeigneter Weise verschieblich an der Bodenplatte 6 bzw. dem Gehäuse 2 gelagert ist, etwa so, wie dies aus den zeichnerischen Darstellungen der Figuren 2 und 3 ersichtlich ist, auf die insoweit verwiesen wird.

Auf der dem Fortsatz 39 gegenüberliegenden Seite der Betätigungseinrichtung ist radial nach Innen hin vorspringend ein Steuerkörper 43 ausgebildet, der in der ersten Stellung der Betätigungseinrichtung (Fig. 2) mit beiden Sperrklinken 14, 15 nicht zusammenwirkt, so daß diese federvorgespannt in ihre Eingriffstellung mit den jeweiligen Zahnkränzen 11 und 12 der beiden Klinkenräder 8 und 10 eingreifen.

Wird der Vorsprung 39 jedoch an das andere Ende der Verschieberichtung bewegt, wie dies in Fig. 3 gezeigt ist, werden durch den Steuerkörper 43 die beiden Steuerklinken 14, 15 aus ihrer Eingriffstellung mit den Zahnkränzen 11 und 12 der Klinkenräder 8 und 10 formschlüssig ausgeschwenkt und geben diese frei, so daß eine völlige Entspannung der Feder 40 und damit auch der Spannung im Spannseil eintreten kann.

Wie aus Fig. 1 noch erkennbar ist, wird das (in Fig. 1 nicht gezeigte) Spannseil in das Gehäuse der Spanneinrichtung 1 an einem Spannseil-Einlaß 44 in der ringförmigen Umlaufwand 7 der Umlaufnut 34 am Ringbereich 33 des zweiten Klinkenrades 10 zugeführt.

In den Figuren 5 bis 7 ist nun, in einer teilweise aufgebrochenen Darstellung, in einer Draufsicht (und nur ganz prinzipiell, ohne Darstellung der meisten Funktionselemente) eine weitere Ausführungsform der Spanneinrichtung 1 gezeigt, bei welcher die Betätigungseinrichtung nicht nur zwei, sondern drei Einstellpositionen einnehmen kann.

Fig. 5 zeigt eine erste Einstellposition, in welcher das anstelle eines Fortsatzes 39 vorgesehene Betätigungselement 45 der Betätigungseinrichtung sich in seiner einen Endstellung (in Fig. 5: rechte Endstellung) befindet. Die Figur zeigt, daß in dieser Endstellung die beiden Sperrklinken 14 und 15, wie in der Einstellposition gemäß Fig. 2, sich gemeinsam in Eingriff mit den ihnen jeweils zugeordneten Klinkenrädern 8 und 10 (bzw. Zahnkränzen 11 und 12) befinden. In dieser Stellung kann die Spannvorrichtung 1 betätigt und durch Drehen des etwas eingedrückten Drehrades 4 ein Spannen der Spannfeder 40 vorgenommen werden.

Fig. 7 zeigt nun die Stellung der Betätigungseinrichtung am anderen Ende ihrer Verstellstrecke. Diese Schaltstellung entspricht der in Fig. 3 dargestellten zweiten Schaltstellung, in welcher durch die Betätigungseinrichtung die beiden Sperrklinken 14, 15 außer Eingriff mit beiden Klinkenrädern 8 und 10 gebracht und gehalten sind, so daß hier eine völlige Entspannung der Spannfeder 40 und des Spannseiles 23 eintreten kann.

Anders als bei der Ausführungsform, die in den Figuren 1 bis 3 gezeigt ist, ist bei der in den Figuren 5 bis 7 dargestellten Ausführungsform der Spannvorrichtung 1 bei der Betätigungseinrichtung noch eine Einstell-Zwischenposition vorgesehen, die in Fig. 6 gezeigt ist: Hier wird in einer Zwischenstellung zwischen den beiden Endstellungen am Ende der beiden Bewegungsrichtungen der Betätigungseinrichtung nur die Sperrklinke 14 des ersten Klinkenrades 8 aus ihrer Eingriffsposition mit diesem herausgedreht, während die zweite Sperrklinke 15 sich noch weiterhin in Eingriff mit dem ihr zugeordneten zweiten Klinkenrad 10 steht. In dieser Zwischenposition kann zunächst ein großer Teil der Spannung der Spannfeder 40 abgebaut werden, wonach bei weiterer Bewegung der Betätigungseinrichtung in die Endstellung gemäß Fig. 7, in der auch die andere Sperrklinke 15 das zweite Klinkenrad 10 freigibt, eine noch vorhandene Restspannung in der Spannfeder 40 und im Spannstrang 23 abgebaut wird.

Der Vorteil dieser Ausgestaltung, wie sie in den Fig. 5 bis 7 gezeigt ist, besteht darin, daß vor der Demontage nicht die gesamte im System befindliche Vorspannung schlagartig freigegeben wird, sondern stufenartig in zwei Stufen erfolgt, wodurch eine geringere Belastung der Einzelelemente in der Spanneinrichtung 1 bei Spannungsfreigabe erreicht werden kann.

Der Fortsatz 39 bzw. das Betätigungselement 45 mit den jeweils beidseits desselben in Richtung seiner Bewegungsbahn sich erstreckenden Flügeln 41, 42, die bevorzugt streifenförmig mit gleicher Breite über Ihre Erstreckungslänge hinweg ausgebildet sind, wird jeweils entlang einer kreisabschnittförmig gerichteten Kreisbahn um die Mittelachse der beiden axial zueinander ausgerichteten Klinkenräder 8 und 10 herumbewegt.

Zu bemerken ist auch, daß, wie aus der Darstellung der Fig. 1 ersichtlich ist, mit Ausnahme der Betätigungseinrichtung und der beiden Sperrklinken 14, 15 alle anderen konstruktiven Elemente der Vorrichtung zueinander längs einer Mittelachse angeordnet und ausgerichtet sind, weshalb bei der Montage ein Aufschieben der Teile übereinander entlang der zentralen Mittelachse durchführbar ist. Es hat sich gezeigt, daß eine solche Anordnung bei der Herstellung in nur zwei bis drei Minuten montierbar ist.

Im praktischen Einsatz wird die mit einer solchen Spannvorrichtung 1 versehene Gleitschutzkette 21 mit in ihrer zweiten Position eingestellter Betätigungseinrichtung der Spannvorrichtung 1 (Sperrklinken 14 und 15 befinden sich außer Eingriff mit den Klinkenrädern 8 und 10) über die Lauffläche des Reifens 22 auf dessen Rückseite überführt, soweit dies bei stehendem Reifen 22 möglich ist. Anschließend wird an der Spannvorrichtung 1 die Betätigungseinrichtung in ihre erste Position eingestellt, in der beide Sperrklinken 14 und 15 mit ihren Klinkenrädern 8 und 10 in Zahneingriff stehen. Hiernach wird manuell das Drehrad 4 vom Benutzer etwas in das Gehäuse der Spannvorrichtung eingedrückt (z. B. 3 bis 4 mm), wodurch es in drehschlüssigen Eingriff mit der Zwischenplatte 5 gelangt. Im eingedrückten Zustand wird sodann das Drehrad 4 im Uhrzeigersinn gedreht, wodurch die Zwischenplatte 5 und das mit dieser über den Mittelvorsprung 9 drehschlüssig verbundene erste Klinkenrad 8 in gleicher Drehrichtung angetrieben wird. In Gegenrichtung ist er allerdings durch die Sperrklinke 14 blockiert. Durch den drehenden Mittelvorsprung 9 wird die an diesem mit ihrem inneren Ende 18 verbundene Spannfeder 40 zunehmend gespannt, wobei bei Erreichen einer bestimmten Spannung auch das zweite Klinkenrad 10 über die Spannfeder 40 in gleicher Drehrichtung ebenfalls in Bewegung gesetzt und auch hier eine Bewegung in Gegenrichtung durch die Sperrklinke 15 verhindert wird. Die Verdrehung des zweiten Klinkenrades 10 wird auf das an dieses angeschlossene Spannseil übertragen und spannt letzteres. Eine überschüssige Vorspannkraft wird in der Spannfeder 40 gespeichert und freigegeben, sobald der Reifen 22 etwas bewegt wurde, wodurch insgesamt ein fester und guter Sitz der Gleitschutzkette 21 auf dem Rad 22 sichergestellt wird. Ein unerwünschtes Entspannen des Spannseiles der Gleitschutzkette 21 kann nicht stattfinden, da das zweite Klinkenrad 10 entgegen der Spannrichtung durch die zweite Sperrklinke 15 drehblockiert ist.

Zur Demontage der Gleitschutzkette 21 wird die Betätigungseinrichtung der Spannvorrichtung 1 in ihre andere (zweite) Einstellposition verbracht, wodurch beide Sperrklinken 14, 15 außer Eingriff mit den Klinkenrädern 8 und 9 gebracht werden und sich dadurch die Anordnung frei entspannen kann.

Wird eine Betätigungseinrichtung an der Spannvorrichtung eingesetzt, die drei Einstellpositionen hat, wird zur Demontage zuerst die Betätigungseinrichtung in die Zwischenposition verbracht, in der ein Teil der Spannung freigegeben wird. Ist dies erfolgt, kann durch Einstellen der zweiten Einstellposition die noch restliche Spannung freigegeben werden.

## Patentansprüche

1. Spannvorrichtung (1) für eine Gleitschutzkette, mit einem Gehäuse (2) mit einem Deckel (3) und mit einer Einrichtung zum Spannen eines Spannseiles (23) der Gleitschutzkette (1), wobei diese Einrichtung als manuell betätigbares Drehrad (4) ausgebildet ist, das durch eine zentrale Öffnung im Deckel (3) hindurch ragt, ferner mit einem ersten Klinkenrad (8), das einen axialen Mittelvorsprung (9) aufweist, einem axial neben dem ersten Klinkenrad (8) angeordneten zweiten Klinkenrad (10) mit einer zentralen Öffnung (37), durch die der axiale Mittelvorsprung (9) des ersten Klinkenrades (8) hindurch gesteckt ist, wobei das zweite Klinkenrad (10) einen seinem umlaufenden Zahnkranz (12) axial nachgeschalteten Ringbereich (33) mit einer Umlaufnut (34) zum Aufwickeln des Spannseiles (23) umfaßt, der eine radial innere Ausnehmung (35) aufweist, in die der Mittelvorsprung (9) des ersten Klinkenrades (8) hineinragt und in der im radialen Bereich zwischen dem Mittelvorsprung (9) und der inneren Umlauffläche der Ausnehmung (35) eine Spiralfeder (40) sitzt, deren radial inneres Ende (18) an den Mittelvorsprung (9) des ersten Klinkenrades (8) und deren radial äußeres Ende (19) an die innere Umfangsfläche der inneren Ausnehmung (35) des zweiten Klinkenrades (10) angeschlossen ist, wobei das Drehrad (4) über eine Druckfeder (31) axial in Richtung zum Deckel (3) hin vorgespannt sowie gegenüber diesem drehfest blockiert und entgegen der Vorspannung sowie unter Freigabe seiner Drehblockierung axial um eine vorgegebene Länge in das Gehäuse (2) eindrückbar ist, wobei ferner eine kreisförmige Zwischenplatte (5) zwischen Deckel (3) und zweitem Klinkenrad (10) zwischengeschaltet ist, auf der sich die Druckfeder (31) abstützt und die an ihrer Unterseite einen zentral von ihr axial vorspringenden Formabsatz (38) aufweist, der drehschlüssig mit dem axialen Mittelvorsprung (9) des ersten Klinkenrades (8) in Eingriff steht, ferner mit zwei verschwenkbaren Sperrklinken (14, 15), deren jede dem Zahnkranz (11, 12) eines Klinkenrades (8, 10) zugeordnet sowie zum Eingriff mit diesem hin federvorgespannt ist, wobei im Eingriffszustand das jeweilige Klinkenrad (8, 10) entgegen der Spannrichtung der Spiralfeder (40) blockiert, in Gegenrichtung hierzu jedoch freigegeben ist, und mit einer Betätigungseinrichtung, mit der beide Sperrklinken (14, 15) in eine erste Stellung in Eingriff mit beiden Klinkenrädern (8, 10) und in eine zweite Stellung außer Eingriff mit beiden Klinkenrädern (8, 10) bringbar sind.

2. Spannvorrichtung nach Anspruch 1, **dadurch gekennzeichnet, daß** das Drehrad (4) auf seiner Oberseite in seinem umlaufenden Randbereich mit nach oben gerichteten Klinken (27) versehen ist, die im nicht-eingedrückten Zustand des Drehrades (4) mit an der Unterseite des Deckels (3) im Randbereich um dessen mittlere Öffnung (20) herum angebrachten Klinkenzähnen (28) unter Vorspannung der Druckfeder (31) in Eingriff stehen und das Drehrad (4) in beide Drehrichtungen blockieren.

3. Spannvorrichtung nach Anspruch 1 oder 2, bei der die Zwischenplatte (5) an ihrer Oberseite mit einem zentralen Ringabsatz (30) versehen ist, der einen axialen Endabschnitt der Druckfeder (31) aufnimmt.

4. Spannvorrichtung nach einem der Ansprüche 1 bis 3, bei der die Zwischenplatte (5) an ihrer Oberseite mit ringförmig umlaufenden, axial vorragenden Formvorsprüngen (17) versehen ist, die beim Eindrücken des Drehrades (4) mit an dessen Unterseite angebrachten axialen Formvorsprüngen (13) in einen drehschlüssig wirksamen Formeingriff bringbar sind.

5. Spannvorrichtung nach einem der Ansprüche 1 bis 4, bei der die Betätigungseinrichtung in Form eines am Gehäuse (2) gelagerten, längs einer kreisabschnittförmig verlaufenden Bewegungsbahn beweglichen Betätigungsgliedes (39) ausgebildet ist, das einen aus dem Gehäuse (2) herausragenden Fortsatz (39) aufweist, mittels dessen es zwischen zwei Einstellpositionen verschiebbar ist.

6. Spannvorrichtung nach Anspruch 5, bei der das Betätigungsglied als Schiebeelement mit von dem nach außen ragenden Fortsatz (39) beidseits sich in Richtung seiner kreisförmigen Bewegungsbahn erstreckenden streifenförmigen Flügeln (41, 42) ausgebildet ist, das auf seiner dem Fortsatz (39) gegenüberliegenden Seite mit einem dort vorspringenden Steuerkörper (43) versehen ist, mittels dessen die zwei Sperrklinken (14, 15) in einer Schaltstellung der Betätigungseinrichtung in Eingriff mit den Zahnkränzen (11, 12) beider Klinkenräder (8, 10) stehen, während in der anderen Schaltstellung der Betätigungseinrichtung beide Sperrklinken (14, 15) außer Eingriff mit den Klinkenrädern (8, 10) gehalten sind.

7. Spannvorrichtung nach einem der vorangegangenen Ansprüche, bei der die Betätigungseinrichtung so ausgebildet ist, daß sie zwischen ihren beiden Schaltstellungen noch eine Schaltzwischenstellung umfaßt, in der nur die Sperrklinke (14) des ersten Klinkenrades (8) außer Eingriff mit diesem gebracht ist, während die andere Sperrklinke (15) sich noch in Eingriff mit dem zweiten Klinkenrad (10) befindet.

## Claims

1. Tensioning device (1) for an anti-skid chain, having a housing (2) with a cover (3) and having an installation for tensioning a tensioning cable (23) of the anti-skid chain (1), wherein this installation is configured as a manually activatable rotating wheel (4) which protrudes through a central opening in the cover (3), furthermore having a first ratchet wheel (8) which has an axial central protrusion (9), a second ratchet wheel (10), disposed axially beside the first ratchet wheel (8), with a central opening (37) through which the axial central protrusion (9) of the first ratchet wheel (8) is plugged, wherein the second ratchet wheel (10) comprises an annular region (33) which is axially downstream of the encircling gear rim (12) of said second ratchet wheel (10) and which has an encircling groove (34) for winding up the tensioning cable (23), said annular region (33) having an inner clearance (35) into which the central protrusion (9) of the first ratchet wheel (8) protrudes and in which, in the radial region between the central protrusion (9) and the inner encircling face of the clearance (35), a helical spring (40) sits, the radially inner end (18) of said helical spring (40) being connected to the central protrusion (9) of the first ratchet wheel (8), and the radially outer end (19) of said helical spring (40) being connected to the inner circumferential face of the inner clearance (35) of the second ratchet wheel (10), wherein the rotating wheel (4) by way of a compression spring (31) is pretensioned axially in the direction towards the cover (3) and in relation to said cover (3) is blocked in a rotationally fixed manner and, counter to the pretensioning and while releasing the rotational blocking thereof, is axially depressible by a predefined length into the housing (2), wherein furthermore a circular intermediate plate (5) is interposed between the cover (3) and the second ratchet wheel (10), the compression spring (31) being supported on said intermediate plate (5), and said intermediate plate (5) on the lower side thereof having a moulded platform (38) projecting axially from it in a central manner, which moulded platform (38) engages in a rotation fit with the axial central protrusion (9) of the first ratchet wheel (8), furthermore having two pivotable ratchets (14, 15), each of the latter being assigned to the gear rim (11, 12) of a ratchet wheel (8, 10) and being pretensioned by spring action in a direction for engagement therewith, wherein the respective ratchet wheel (8, 10) in the engaged state is blocked counter to the tensioning direction of the helical spring (40), but is released in the direction counter thereto, and having an activation installation by way of which both ratchets (14, 15) are movable to a first position so as to engage with both ratchet wheels (8, 10), and to a second position so as to disengage from both ratchet wheels (8, 10).

2. Tensioning device according to Claim 1, **characterized in that** the rotating wheel (4) on the upper side thereof, in the encircling peripheral region thereof, is provided with upwardly directed latches (27) which, while pretensioning the compression spring (31), in the non-depressed state of the rotating wheel (4) engage with ratchet teeth (28) that are attached to the lower side of the cover (3) in the peripheral region about the central opening (20) of the latter, and block the rotating wheel (4) in both rotation directions.

3. Tensioning device according to Claim 1 or 2, in which the intermediate plate (5) on the upper side thereof is provided with a central annular shoulder (30) which receives an axial end portion of the compression spring (31).

4. Tensioning device according to one of Claims 1 to 3, in which the intermediate plate (5) on the upper side thereof is provided with annularly encircling, axially protruding moulded protrusions (17) which, when the rotating wheel (4) is depressed, are capable of being brought to engage in a form-fitting engagement, effective as a rotation fit, with axial moulded protrusions (13) that are attached to the lower side of said rotating wheel (4).

5. Tensioning device according to one of Claims 1 to 4, in which the activation installation is configured in the form of an activation member (39) that is mounted on the housing (2) and is movable along a motion path that runs in the shape of portion of a circle, said activation member (39) having an appendage (39) which protrudes from the housing (2) and by means of which said activation member (39) is displaceable between two setting positions.

6. Tensioning device according to Claim 5, in which the activation member is configured as a sliding element having strip-shaped wings (41, 42) that extend from the outwardly protruding appendage (39) to both sides, in the direction of the circular motion path of said activation member, said sliding element on the side thereof that is opposite the appendage (39) being provided with a control body (43) projecting there, by means of which the two ratchets (14, 15) in a switching position of the activation installation are engaged with the gear rims (11, 12) of both ratchet wheels (8, 10), while both ratchets (14, 15) in the other switching position of the activation installation are held so as to be disengaged from the ratchet wheels (8, 10).

7. Tensioning device according to one of the preceding claims, in which the activation installation is configured such that the latter between the two switching positions thereof comprises in addition a switching intermediate position in which only the ratchet (14) of the first ratchet wheel (8) is brought to disengage from the latter, while the other ratchet (15) still remains engaged with the second ratchet wheel (10).

## Revendications

1. Dispositif tendeur (1) pour une chaîne antidérapante, comprenant un boîtier (2) avec un couvercle (3) et avec un dispositif pour tendre un câble de tensionnement (23) de la chaîne antidérapante (1), ce dispositif étant réalisé sous forme de roue tournante (4) à commande manuelle, qui passe à travers une ouverture centrale dans le couvercle (3), et comprenant en outre une première roue à cliquet (8) qui présente une saillie centrale axiale (9), une deuxième roue à cliquet (10) disposée axialement à côté de la première roue à cliquet (8) avec une ouverture centrale (37) à travers laquelle la saillie centrale axiale (9) de la première roue à cliquet (8) est enfichée, la deuxième roue à cliquet (10) comprenant une région annulaire (33) montée axialement après sa couronne dentée périphérique (12) avec une rainure périphérique (34) pour l'enroulement du câble de tensionnement (23), qui présente un évidement radialement interne (35) dans lequel pénètre la saillie centrale (9) de la première roue à cliquet (8) et dans lequel, dans la région radiale entre la saillie centrale (9) et la surface périphérique interne de l'évidement (35), repose un ressort spiral (40) dont l'extrémité radialement interne (18) est raccordée à la saillie centrale (9) de la première roue à cliquet (8) et dont l'extrémité radialement externe (19) est raccordée à la surface périphérique interne de l'évidement interne (35) de la deuxième roue à cliquet (10), la roue tournante (4) étant précontrainte axialement par le biais d'un ressort de compression (31) dans la direction du couvercle (3) et étant bloquée de manière solidaire en rotation par rapport à celui-ci et pouvant être enfoncée, à l'encontre de la précontrainte et en libérant son blocage en rotation, axialement sur une longueur prédéfinie dans le boîtier (2), une plaque intermédiaire de forme circulaire (5) étant en outre interposée entre le couvercle (3) et la deuxième roue à cliquet (10), sur laquelle s'appuie le ressort de compression (31) et qui présente au niveau de son côté inférieur un épaulement façonné (38) faisant saillie centralement axialement depuis celui-ci, lequel est en prise de manière solidaire en rotation avec la saillie centrale axiale (9) de la première roue à cliquet (8), et comprenant en outre deux cliquets de blocage pivotants (14, 15) dont chacun est associé à la couronne dentée (11, 12) d'une roue à cliquet (8, 10) et est précontraint par ressort pour l'engagement avec celle-ci, la roue à cliquet respective (8, 10), dans l'état d'engagement, étant bloquée à l'encontre de la direction de tensionnement du ressort spiral (40), mais étant toutefois libérée dans la direction inverse, et comprenant un dispositif d'actionnement avec lequel les deux cliquets d'arrêt (14, 15), dans une première position, peuvent être amenés en prise avec les deux roues à cliquet (8, 10) et dans une deuxième position peuvent être amenés hors d'engagement avec les deux roues à cliquet (8, 10).

2. Dispositif tendeur selon la revendication 1, **caractérisé en ce que** la roue tournante (4) est pourvue sur son côté supérieur, dans sa région de bord périphérique, de cliquets orientés vers le haut (27) qui, dans l'état non enfoncé de la roue tournante (4), sont en prise avec des dents de cliquet (28) montées sur le côté inférieur du couvercle (3) dans la région du bord autour de son ouverture centrale (20) par précontrainte du ressort de compression (31) et bloquent la roue tournante (4) dans les deux directions de rotation.

3. Dispositif tendeur selon la revendication 1 ou 2, dans lequel la plaque intermédiaire (5) est pourvue au niveau de son côté supérieur d'un épaulement annulaire central (30) qui reçoit une portion d'extrémité axiale du ressort de compression (31).

4. Dispositif tendeur selon l'une quelconque des revendications 1 à 3, dans lequel la plaque intermédiaire (5) est pourvue au niveau de son côté supérieur de saillies façonnées faisant saillie axialement (17), disposées sous forme annulaire sur la périphérie, qui peuvent être amenées en engagement par correspondance de formes agissant de manière solidaire en rotation lors de l'enfoncement de la roue tournante (4) avec des saillies façonnées axiales (13) montées sur son côté inférieur.

5. Dispositif tendeur selon l'une quelconque des revendications 1 à 4, dans lequel le dispositif d'actionnement est réalisé sous la forme d'un organe d'actionnement (39) supporté sur le boîtier (2), pouvant être déplacé le long d'une trajectoire de déplacement s'étendant en forme de portion de cercle, qui présente une saillie (39) faisant saillie hors du boîtier (2), au moyen de laquelle il peut être déplacé entre deux positions d'ajustement.

6. Dispositif tendeur selon la revendication 5, dans lequel l'organe d'actionnement est réalisé sous forme d'élément coulissant avec des ailes en forme de bande (41, 42) s'étendant depuis la saillie saillant vers l'extérieur (39) des deux côtés dans la direction de sa trajectoire de déplacement circulaire, qui est pourvu sur son côté opposé à la saillie (39) d'un corps de commande (43) saillant depuis celui-ci, au moyen duquel les deux cliquets d'arrêt (14, 15), dans une position de commutation du dispositif d'actionnement, sont en prise avec les couronnes dentées (11, 12) des deux roues à cliquet (8, 10) tandis que dans l'autre position de commutation du dispositif d'actionnement, les deux cliquets d'arrêt (14, 15) sont maintenus hors d'engagement avec les roues à cliquet (8, 10).

7. Dispositif tendeur selon l'une quelconque des revendications précédentes, dans lequel le dispositif d'actionnement est réalisé de telle sorte qu'il comprenne, entre ses deux positions de commutation, encore une position intermédiaire dans laquelle seul le cliquet d'arrêt (14) de la première roue à cliquet (8) est amené hors d'engagement avec celle-ci tandis que l'autre cliquet d'arrêt (15) se trouve encore en prise avec la deuxième roue à cliquet (10).
